# EUROPÄISCHE PATENTSCHRIFT

(11) **EP 2 320 194 B1**
(45) Veröffentlichungstag und Bekanntmachung des Hinweises auf die Patenterteilung: **18.06.2014**
(21) Anmeldenummer: 10013744.7
(22) Anmeldetag: 18.10.2010
(51) Int. Cl.: G01C 21/36, G10L 15/22, B60R 16/037

(54) **Verfahren und Vorrichtung zur Spracheingabe für ein Fahrzeug**
Method and device for voice input for a vehicle
Procédé et dispositif de saisie vocale pour un véhicule

(30) Priorität: 04.11.2009 DE 102009051882
(43) Veröffentlichungstag der Anmeldung: 11.05.2011
(73) Patentinhaber: Volkswagen Aktiengesellschaft, 38440 Wolfsburg (DE)
(72) Erfinder: Struhs, Stefan, 38118 Braunschweig (DE); Fabian, Thomas, 31139 Hildesheim (DE)

(56) Entgegenhaltungen:
- DE-A1-102008 051 756
- US-A1- 2006 022 958

## Beschreibung

Die vorliegende Erfindung betrifft ein Verfahren zur Spracheingabe für ein Fahrzeug, wobei mittels der Spracheingabe eine Information in eine Vorrichtung des Fahrzeugs eingegeben wird, welche zudem eine Anzeige zur Darstellung von Informationen der Vorrichtung umfasst, wobei ein spezieller Modus zur manuellen Informationseingabe aktiviert wird, sobald ein Gegenstand in einem Umgebungsbereich der Anzeige erfasst wird, wobei der spezielle Modus deaktiviert wird, sobald kein Gegenstand mehr in dem Umgebungsbereich der Anzeige erfasst wird, wobei Bedienungshinweise der Spracheingabe, welche auf der Anzeige dargestellt werden, ausgeblendet werden, sobald der spezielle Modus aktiviert wird, und wobei die Bedienungshinweise einer Visualisierung wichtiger Sprachbedienhilfen dienen und/oder mögliche Sprachbefehle vermitteln.

Die Erfindung betrifft ferner eine entsprechende Vorrichtung zur Spracheingabe sowie ein Fahrzeug mit einer Vorrichtung zur Spracheingabe.

Die US 6,243,683 B1 offenbart ein Verfahren, mit welchem eine Spracheingabe mittels einer Geste einer Bedienperson gesteuert werden kann.

Die US 6,532,447 B1 beschreibt eine Kommunikationsvorrichtung, bei welcher mittels einer Handbewegung eine Spracheingabe eingeschaltet wird, wenn die Spracheingabe ausgeschaltet ist, oder die Spracheingabe ausgeschaltet wird, wenn die Spracheingabe eingeschaltet ist.

Die DE 10 2006 028 046 A1 offenbart eine Vorrichtung, wobei ein Bildschirm der Vorrichtung beim Erfassen eines Bedienmittels von einem Informationsmodus in einen Bedienmodus umschaltbar ist.

Bei einigen Geräten im Fahrzeug, wie beispielsweise bei einem Mobilfunkgerät oder bei einem Navigationsgerät, wird nach dem Stand der Technik eine Spracheingabe zur Informationseingabe eingesetzt. Allerdings ermöglichen diese Geräte in aller Regel auch eine manuelle Eingabe der notwendigen Informationen, so dass bisweilen der Fall auftritt, dass die Spracheingabe durch die manuelle Eingabe oder dass die manuelle Eingabe durch die Spracheingabe gestört wird.

Darüber hinaus teilt sich die Spracheingabe mit dem zu bedienenden Gerät denselben Bildschirm, was bisweilen zu Problemen hinsichtlich der auf dem Bildschirm darzustellenden Information führt.

Aus der US 2006/0022958 A1 ist eine Einrichtung bekannt, bei der informationen in einem manuellen Modus mit der Hand oder in einem Mikrofonmodus mit der Sprache eingegeben werden können. Wird der Mikrofonmodus aktiviert, so erscheint ein Mikrofonsymbol auf einem Display.

Aus der DE 10 2008 051 756 A1 ist eine multimodale Benutzerschnittstelle eines Fahrerassistenzsystems zur Eingabe und Präsentation von Informationen bekannt, Die Benutzerschnittstelle umfasst ein kapazitive Sensorik zur Eingabe von Informationen mit Hilfe von Gesten und ein Spracherkennungsmodul zur Eingabe von Informationen mit Hilfe von Sprache. Mehrere Eingabesignale dieser Eingabemodalitäten können zueinander in Beziehung gesetzt werden, um einen gemeinsamen Eingabebefehf abzuleiten.

Daher ist es die Aufgabe der vorliegenden Erfindung, die nach dem Stand der Technik vorhandenen Probleme zumindest teilweise zu vermeiden.

Erfindungsgemäß wird diese Aufgabe durch ein Verfahren zur Spracheingabe nach Anspruch 1, eine Vorrichtung zur Spracheingabe nach Anspruch 3 und ein Fahrzeug nach Anspruch 5 gelöst. Die abhängigen Ansprüche definieren bevorzugte und vorteilhafte Ausführungsformen der vorliegenden Erfindung.

Das eingangs erwähnte Verfahren zur Spracheingabe ist erfindungsgemäß also dadurch gekennzeichnet, dass die Informationseingabe nach Ausblendung der Bedienhinweise auch weiterhin über die Spracheingabe erfolgen kann.

Im Rahmen der vorliegenden Erfindung wird auch ein Verfahren zur Spracheingabe für ein Fahrzeug bereitgestellt, wobei mittels der Spracheingabe eine Information in eine Vorrichtung des Fahrzeugs eingegeben wird. Die Vorrichtung umfasst dabei eine Anzeige oder einen Bildschirm, womit Informationen der Vorrichtung dargestellt werden. Sobald ein Gegenstand in einem Umgebungsbereich der Anzeige erfasst wird, wird ein spezieller Modus für eine manuelle Bedienhandlung aktiviert. Dieser spezielle Modus wird wieder deaktiviert, sobald kein Gegenstand mehr in dem Umgebungsbereich der Anzeige erfasst wird. Bedienungshinweise hinsichtlich der Spracheingabe, beispielsweise Bedienungshinweise zur Unterstützung der Spracheingabe, welche auf der Anzeige dargestellt werden, werden ausgeblendet, sobald der spezielle Modus aktiviert wird. Wenn der spezielle Modus wieder deaktiviert wird, können die Bedienungshinweise wieder eingeblendet werden. Es ist allerdings ebenso möglich, dass die Bedienungshinweise nicht wieder eingeblendet werden, wenn der spezielle Modus deaktiviert wird.

Erfindungsgemäß werden Bedienungshinweise der Spracheingabe, welche auf einer Anzeige des Fahrzeugs dargestellt werden, für den Fall ausgeblendet, dass der spezielle Modus aktiviert wird. Diese Bedienungshinweise dienen der Visualisierung der wichtigsten Sprachbedienhilfen und vermitteln die möglichen Sprachbefehle insbesondere für Erstbenutzer, um die Hemmschwelle und Nichtbereitschaft zum Aufrufen einer auditiv-verbalen/akustischen Hilfe zu umgehen.

Diese Sprachbedienhilfen überdecken allerdings auch den aktiven Bedienkontext und behindern damit im Wesentlichen die manuelle Bedienung beispleisweise bei einem Modalitätswechsel (Wechsel der Art und Wiese der Informationseingabe) aber auch bei der Erfassung von Informationen im Rahmen des aktiven Bedienkontextes während der Sprachbedienung. Durch die Ausblendung der Bedienungshinweise ist gewährleistet, dass eine manuelle Informationseingabe nicht durch Bedienungshinweise für die Spracheingabe behindert wird. Anders ausgedrückt werden Betriebshinweise zur Spracheingabe vorteilhafterweise nur dann angezeigt, wenn keine manuelle Informationseingabe vorgenommen wird.

Die Bedienungshinweise können wieder eingeblendet werden, sobald der spezielle Modus deaktiviert wird. Dies ist natürlich nur dann sinnvoll, wenn die Spracheingabe fortgesetzt wird, sobald der spezielle Modus deaktiviert wird.

Es ist allerdings erfindungsgemäß auch möglich, dass die Bedienungshinweise nicht wieder eingeblendet werden, auch wenn der spezielle Modus deaktiviert wird, da kein Gegenstand mehr in dem Umgebungsbereich des Bedienelements erfasst wird. Mit anderen Worten werden bei dieser Variante die Bedienungshinweise z.B. für den gesamten Vorgang der Informationseingabe ausgeblendet, sobald ein Gegenstand im Umgebungsbereich des Bedienelements erfasst wird.

Gemäß dem vorab beschriebenen erfindungsgemäßen Verfahren wird bei Erfassung eines Gegenstands in der Nähe des Bedienelements (z.B. eines berührungsempfindlichen Bildschirms oder einer Tastatur) quasi die Intention einer manuellen Bedienhandlung impliziert, so dass ein aktiver Sprachdialog kurzzeitig (während der Gegenstand erfasst wird) pausiert wird, so dass manuelle Bedienhandlungen möglich sind, ohne dass die aktive Sprachdialogsitzung gänzlich abgebrochen werden muss. Sobald der Gegenstand nicht mehr in der Nähe des Bedienelements erfasst wird, wird die zuletzt aktive, pausierte Sprachdialogsitzung (aufsynchronisiert zu den getätigten manuellen Bedienhandlungen) fortgesetzt, ohne dass der Sprachdialog wieder explizit neu z.B. über eine 'Push to Talk'-Taste oder ein gesprochenes Schlüsselwort gestartet werden muss. Die vorliegende Erfindung ermöglicht so automatisch eine multimodale Bedienung (d.h. eine wechselnde Bedienung über Spracheingabe und manuelle Eingabe).

Indem die Bedienungshinweise, mit welchen die Spracheingabe unterstützt wird, ausgeblendet werden, kann der Bildschirm vorteilhafterweise vollständig zur Unterstützung der Informationseingabe in die Vorrichtung eingesetzt werden. Nach der Ausblendung der Bedienungshinweise kann die Informationseingabe dabei erfindungsgemäß auch weiterhin über die Spracheingabe erfolgen.

Erfindungsgemäß wird auch eine Vorrichtung zur Spracheingabe für ein Fahrzeug bereitgestellt. Dabei umfasst die Vorrichtung Spracheingabemittel und eine Anzeige. Über die Spracheingabemittel wird eine Information für die Vorrichtung eingegeben, und die Anzeige dient zur Darstellung einer Information der Vorrichtung. Die Vorrichtung umfasst darüber hinaus einen Näherungssensor. Die Vorrichtung ist derart ausgestaltet, dass die Vorrichtung einen speziellen Modus für eine manuelle Bedienhandlung aktiviert, sobald der Näherungssensor einen Gegenstand in der Nähe der Anzeige erfasst, und dass die Vorrichtung den speziellen Modus deaktiviert, sobald der Näherungssensor keinen Gegenstand mehr in der Nähe der Anzeige erfasst. Die Vorrichtung blendet Bedienungshinweise der Spracheingabe, weiche auf der Anzeige dargestellt werden, aus, sobald der spezielle Modus aktiviert wird.

Die Vorteile der erfindungsgemäßen Vorrichtung entsprechen im Wesentlichen den Vorteilen des erfindungsgemäßen Verfahrens, so dass hier auf eine Wiederholung verzichtet wird.

Schließlich wird im Rahmen der vorliegenden Erfindung ein Fahrzeug mit der oben beschriebenen erfindungsgemäßen Vorrichtung bereitgestellt.

Selbstverständlich ist die vorliegende Erfindung nicht auf diese bevorzugten Anwendungsbereiche eingeschränkt, da die vorliegende Erfindung beispielsweise auch bei Schiffen, Flugzeugen oder gleisgebundenen Fahrzeugen eingesetzt werden kann. Darüber hinaus ist ein Einsatz der vorliegenden Erfindung auch außerhalb von Fortbewegungsmitteln für die Informationseingabe in ein beliebiges Gerät (z.B. mobiles Navigationsgerät), welches eine Spracheingabe unterstützt, denkbar.

Im Folgenden werden erfindungsgemäße Ausführungsformen im Detail mit Bezug zu den Figuren beschrieben.
- Fig. 1: stellt ein Menü eines Navigationsgeräts dar.
- Fig. 2: stellt ein Menü eines Navigationsgeräts bei einer Spracheingabe dar.
- Fig. 3: stellt ein weiteres Menü eines Navigationsgeräts bei einer Spracheingabe dar.
- Fig. 4: stellt ein noch anderes Menü eines Navigationsgeräts bei einer Spracheingabe dar.
- Fig. 5: stellt ein Menü eines Navigationsgeräts bei einer unterbrochenen Spracheingabe dar.
- Fig. 6: stellt ein weiteres Menü eines Navigationsgeräts bei einer unterbrochenen Spracheingabe dar.
- Fig. 7: stellt ein Menü eines Navigationsgeräts bei einer Spracheingabe dar.
- Fig. 8: stellt ein Menü eines Navigationsgeräts mit einem überlagerten Bedienungshinweis für eine Spracheingabe dar.
- Fig. 9: stellt ein Menü eines Navigationsgeräts dar, nachdem ein Bedienungshinweis für die Spracheingabe ausgeblendet ist.
- Fig. 10: stellt schematisch ein erfindungsgemäßes Fahrzeug mit einer erfindungsgemäßen Vorrichtung dar.

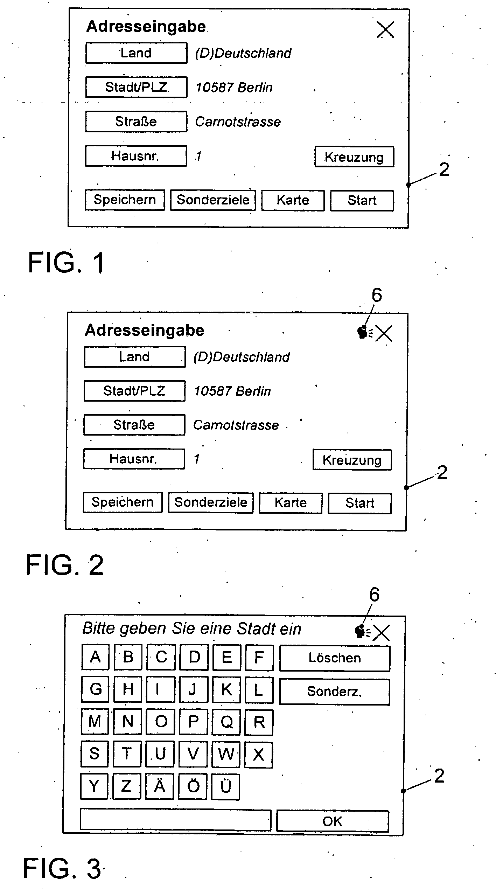

Mit Hilfe der Figuren 1 bis 7 wird im Folgenden ein beispielhafter Ablauf für ein Verfahren bei einer Informationseingabe in ein Navigationsgerät dargestellt. Nach einer Aktivierung des Navigationsgeräts erscheint das in Fig. 1 dargestellte Menü auf einer Anzeige 2 eines Fahrzeugs (hier nicht dargestellt).

Nachdem eine Spracheingabe oder Sprachbedienung über einen 'Push to Talk'-Knopf oder über ein gesprochenes Schlüsselwort aktiviert worden ist, erscheint das in Fig. 2 dargestellte Menü auf der Anzeige 2. Mit einem Symbol "Spracheingabe aktiv" 6 wird einer Bedienperson bzw. einem Benutzer signalisiert, dass die Spracheingabe bzw. der Sprachdialog aktiv ist und dass der Spracherkenner zur Erkennung bereit ist.

Nachdem die Bedienperson das Schlüsselwort "Stadt" gesprochen hat, erscheint das in Fig. 3 dargestellte Menü auf der Anzeige 2, welches auch als Stadtspeller bezeichnet wird. Dazu reagiert der Sprachdialog mit der gesprochenen Aufforderung "Bitte nennen Sie die Stadt" an den Benutzer.

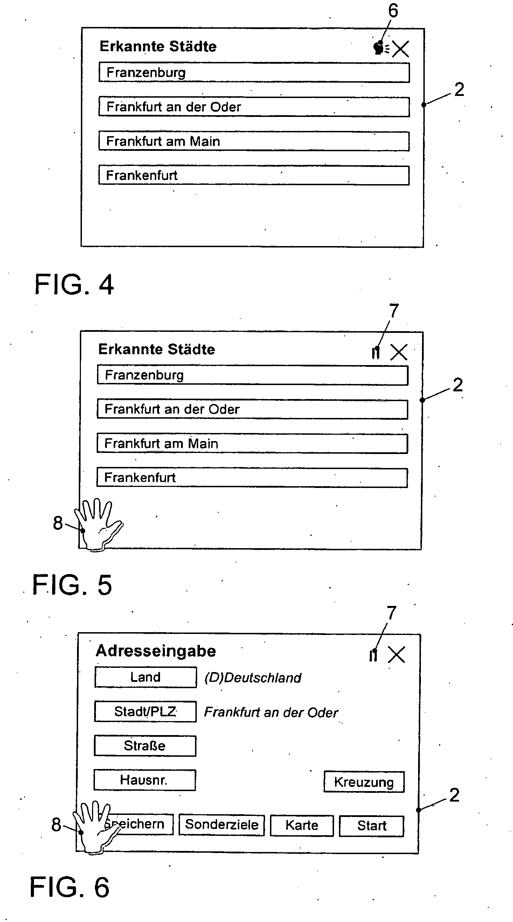

Nachdem der Benutzer "Frankfurt" gesagt hat, ermittelt das Navigationsgerät die potenziell erkannten Stadtnamen, und diese erkannten Stadtnamen werden auf der Anzeige 2 dargestellt, wie es in Fig. 4 gezeigt ist. Dazu fragt der Sprachdialog "Meinten Sie Franzenburg?".

Der Benutzer schaut auf die Anzeige 2 und erkennt, dass die Spracherkennung nicht optimal gearbeitet hat. Da sich allerdings der von dem Benutzer gesprochene Stadtname "Frankfurt" in der auf der Anzeige 2 dargestellten Liste befindet, entscheidet der Benutzer, die Stadt nun manuell einzugeben, indem der Benutzer den entsprechenden Eintrag in der Liste selektiert. Dazu tippt der Benutzer mit einem Finger auf die Anzeige 2, welche somit auch ein Bedienteil darstellt, oder selektiert mittels eines Bedienteils (hier nicht dargestellt) den entsprechenden Listeneintrag. Eine Annäherungssensorik (hier nicht dargestellt) erfasst die Hand des Benutzers im Umgebungsbereich des Bildschirms bzw. Bedienelements, wodurch ein Nicht-Spracheingabemodus aktiviert wird. In dem Nicht-Spracheingabemodus wird die aktive Sprachdialogsitzung bzw. die Spracheingabe pausiert und der Spracherkenner geschlossen, um Fehlerkennungen und Zeitüberschreitungen zu vermeiden. Dem Benutzer wird der aktive Nicht-Spracheingabemodus mittels eines Symbols "manuelle Eingabe" oder "Spracheingabe pausiert" 7 auf der Anzeige 2 dargestellt, wie es in Fig. 5 gezeigt ist. Der Benutzer weiß, dass eine Spracheingabe nicht möglich ist, solange das Symbol "manuelle Eingabe" 7 auf der Anzeige 2 dargestellt ist. Das Handsymbol 8 soll dem Leser dieser Beschreibung verdeutlichen, dass eine Hand (ein Finger) oder ein Bedienteil des Benutzers sensiert worden ist. Mit anderen Worten erscheint das Handsymbol 8 nicht auf der Anzeige 2.

Der Benutzer selektiert auf der Anzeige 2 den Eintrag "Frankfurt an der Oder". Das Navigationsgerät übernimmt diese Auswahl und zeigt das in Fig. 6 dargestellte Menü auf der Anzeige 2 an. Man erkennt an dem Symbol "manuelle Eingabe" 7, dass der Nicht-Spracheingabemodus noch aktiviert ist, und die "Spracheingabe pausiert" ist, d.h. die Spracheingabe ist nicht aktiv.

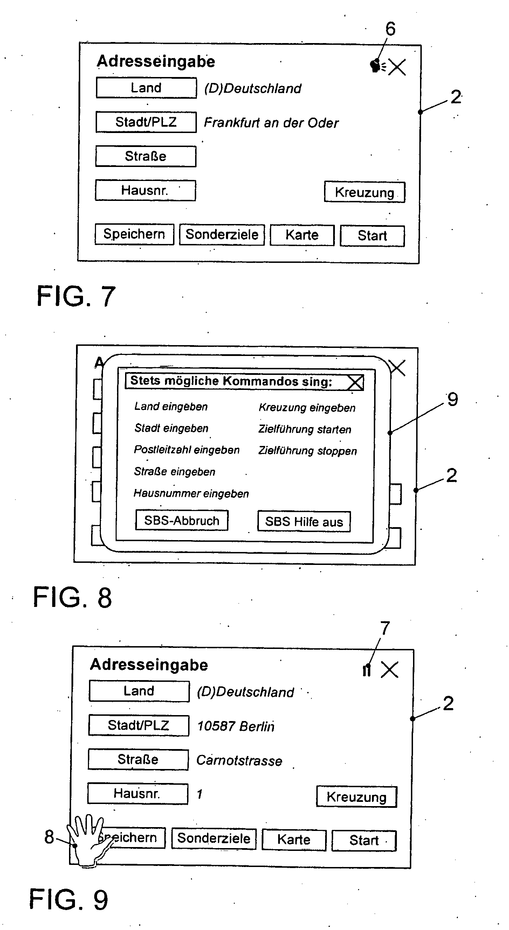

Der Benutzer entfernt nun seine Hand vom Bildschirm oder von dem Bedienelement, so dass der Nicht-Spracheingabemodus deaktiviert wird, da von der Annäherungssensorik kein Gegenstand mehr im Umgebungsbereich des Bildschirms bzw. Bedienelements erfasst wird. Durch die Deaktivierung des Nicht-Spracheingabemodus wird die pausierte Sprachdialogsitzung aufsynchronisiert und an einer entsprechenden Stelle fortgesetzt. Auf der Anzeige 2 wird das in Fig. 7 dargestellte Menü gezeigt und der Sprachdialog fragt den Benutzer: "Möchten Sie eine Straße eingeben oder die Zielführung starten?"

Mit anderen Worten wird die Spracheingabe automatisch deaktiviert, sobald die Hand in der Nähe des Bildschirms/Anzeige bzw. des Bedienelements erfasst wird, und die Spracheingabe wird automatisch wieder aktiviert, sobald die Hand nicht mehr in der Nähe der Anzeige bzw. des Bedienelements erfasst wird, ohne dass dazu ein Knopf (z.B. ein 'Push to Talk'-Knopf) betätigt oder ein Schlüsselwort besprochen werden muss..

Im Folgenden wird ein beispielhafter Ablauf für ein erfindungsgemäßes Verfahren bei einer Informationseingabe in das Navigationsgerät dargestellt. Nach einer Aktivierung des Navigationsgeräts erscheint wiederum das in Fig. 1 dargestellte Menü auf der Anzeige 2.

Die Spracheingabe wird beispielsweise über einen 'Push to Talk'-Knopf oder über ein gesprochenes Schlüsselwort aktiviert. Zur visuellen Darstellung der wichtigsten Sprachkommandos wird ein Bedienungshinweis 9, welcher den aktiven Bedienkontext auf der Anzeige 2 überdeckt, dargestellt, wie es in Fig. 8 dargestellt ist.

Der Benutzer nähert sich mit einer Hand der Anzeige 2, wobei die Annäherungssensorik dies erfasst. Sobald die Annäherungssensorik die Hand in dem Umgebungsbereich der Anzeige bzw. des Bedienelements erfasst, wird ein spezieller Modus aktiviert, was in diesem Fall dazu führt, dass der Bedienungshinweis 9 ausgeblendet wird, wie es in Fig. 9 dargestellt ist.

Der Benutzer erkennt nun, dass die von ihm gewünschte Stadt bereits eingegeben ist und kann nun beispielsweise direkt ein Sonderziel nahe der bereits eingegebenen Adresse beispielsweise mittels Spracheingabe eingeben. Sobald der Benutzer seine Hand wieder von der Anzeige 2 entfernt, wird dies von der Annäherungssensorik erfasst, wodurch der spezielle Modus deaktiviert wird. Sobald der spezielle Modus deaktiviert wird, wird der Bedienungshinweis 9 für die Spracheingabe wieder eingeblendet, so dass der Benutzer wieder das in Fig. 8 dargestellte Menü sieht. Der Benutzer weiß allerdings durch das vorübergehende Ausblenden des Bedienungshinweises 9, dass er im aktiven Bedienkontext auch den Befehl "Sonderziele" geben kann, dessen zugehöriger Knopf nun wieder von dem Bedienungshinweis 9 überdeckt ist.

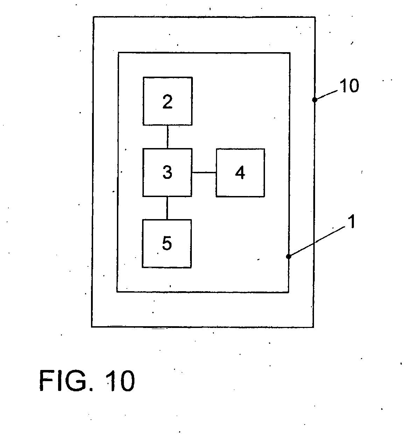

In Fig. 10 ist ein erfindungsgemäßes Fahrzeug 10 mit einer erfindungsgemäßen Vorrichtung 1 dargestellt. Die erfindungsgemäße Vorrichtung 1 umfasst dabei die Anzeige 2, das Bedienteil 3, den Annäherungssensor 4, mit welchem ein Gegenstand in einem Umgebungsbereich des Bedienelements 3 erfasst werden kann, und Spracheingabemittel 5.

### Bezugszeichenliste

- 1: Vorrichtung
- 2: Anzeige
- 3: Bedienteil
- 4: Näherungssensor
- 5: Spracheingabemittel
- 6: Symbol "Spracheingabe aktiv"
- 7: Symbol "Spracheingabe pausiert" bzw. "manuelle Eingabe"
- 8: Handsymbol
- 9: Bedienungshinweis
- 10: Fahrzeug

## Patentansprüche

1. Verfahren zur Spracheingabe für ein Fahrzeug (10),
wobei mittels der Spracheingabe eine Information in eine Vorrichtung (1) des Fahrzeugs (10) eingegeben wird, welche zudem eine Anzeige (2) zur Darstellung von Informationen der Vorrichtung (1) umfasst,
wobei ein spezieller Modus für eine manuelle Bedienhandlung aktiviert wird, sobald ein Gegenstand in einem Umgebungsbereich der Anzeige (2) erfasst wird,
wobei der spezielle Modus deaktiviert wird, sobald kein Gegenstand mehr in dem Umgebungsbereich der Anzeige (2) erfasst wird,
wobei Bedienungshinweise (9) der Spracheingabe, welche auf der Anzeige (2) dargestellt werden, ausgeblendet werden, sobald der spezielle Modus aktiviert wird, und wobei die Bedienungshinweise einer Visualisierung wichtiger Sprachbedienhilfen dienen und/oder mögliche Sprachbefehle vermitteln,
**dadurch gekennzeichnet,**
**dass** die Informationseingabe nach Ausblendung der Bedienungshinweise auch weiterhin über die Spracheingabe erfolgen kann.

2. Verfahren nach Anspruch 1, **dadurch gekennzeichnet, dass** die Bedienungshinweise (9) wieder eingeblendet werden, wenn der spezielle Modus deaktiviert wird.

3. Vorrichtung zur Spracheingabe, für ein Fahrzeug (10),
wobei die Vorrichtung (1) Spracheingabemittel (5) und eine Anzeige (2) umfasst, wobei mittels der Spracheingabemittel (5) eine Information für die Vorrichtung (1) eingebbar Ist, und
wobei die Anzeige, (2) zur Darstellung einer Information der Vorrichtung (1) ausgestaltet ist, dass die Vorrichtung (1) einen Näherungssensor (4) umfasst,
dass die Vorrichtung (1) dedart ausgestallet ist, dass die Vorrichtung (1) einen speziellen
Modus für eine manuelle Bedienhandlung aktiviert, sobald der Näherungssensor (4) einen Gegenstand in einem Umgebungsbereich der Anzeige (2) erfasst,
dass die Vorrichtung (1) den speziellen Modus deaktiviert, sobald der Näherungssensor (4) keinen Gegenstand mehr in dem Umgebungsbereich der Anzeige (2) erfasst dass die Vorrichtung (1) Bedienungshinweise (9) der Spracheingabe, welche auf der Anzeige (2) dargestellt werden, ausblendet, sobald der spezielle Modus aktiviert wird, und wobei die Bedienungshinweise einer. Visualisierung wichtiger Sprachbedienhilfen dienen und/oder mögliche Sprachbefehle vermitteln,
**dadurch gekennzeichnet,**
**dass** die Vorrichtung derart ausgestaltet ist, dass die Informationseingabe nach Ausblendung der Bedienungshinweise auch weiterhin über die Spracheingabe, erfolgen kann.

4. Vorrichtung nach Anspruch 5, **dadurch gekennzeichnet, dass** die Vorrichtung (1) zur Durchführung des Verfahrens nach Anspruch 2 ausgestaltet ist.

5. Fahrzeug mit einer Vorrichtung (1) nach Anspruch 3 oder 4.

## Claims

1. Voice input method for a vehicle (10),
wherein the voice input is used to input information into a device (1) of the vehicle (10), which device (1) also comprises a display (2) for displaying information of the device (1),
wherein a special mode for manual operator control is activated as soon as an object is detected in an area surrounding the display (2),
wherein the special mode is deactivated as soon as an object is no longer detected in the area surrounding the display (2),
wherein voice input operator control instructions (9) which are displayed on the display (2) are removed from the display as soon as the special mode is activated, and wherein, the operator control instructions serve to display important operator control assistance and/or to communicate possible voice commands,
**characterized**
**in that** after the removal of the operator control instructions from the display the information can also continue to be input by means of the voice input.

2. Method according to Claim 1, **characterized in that** the operator control instructions (9) are included in the display again when the special mode is deactivated.

3. Voice input device for a vehicle (10),
wherein the device (1) comprises voice input means (5) and a display (2),
wherein information for the device (1) can be input by means of the voice input means (5), and wherein the display (2) is designed to display information of the device (1),
wherein the device (1) comprises a proximity sensor (4),
wherein the device (1) is configured in such a way that the device (1) activates a special mode for manual operator control as soon as the proximity sensor (4) detects an object in an area surrounding the display (2),
wherein the device (1) deactivates the special mode as soon as the proximity sensor (4) no longer detects an object in the area surrounding the display (2),
wherein voice input operator control instructions (9), which are displayed on the display (2) are removed from the display by the device (1) as soon as the special mode is activated, and wherein the operator control instructions serve to display important voice operator control assistance and/or communicate possible voice commands,
**characterized**
**in that** after the removal of the operator control instructions from the display the information can also continue to be input by means of the voice input.

4. Device according to Claim 5, **characterized in that** - the device (1) is designed to carry out the method according to Claim 2.

5. Vehicle having a device (1) according to Claim 3 or 4.

## Revendications

1. Procédé de commande vocale pour véhicule (10),
une information pouvant être introduite par commande vocale dans un dispositif (1) du véhicule (10) qui comporte de plus un affichage (2) qui présente des informations du dispositif (1),
un mode spécial de commande manuelle étant activé dès qu'un objet est détecté dans l'environnement de l'affichage (2),
le mode spécial étant désactivé dès qu'un objet n'est plus détecté dans l'environnement de l'affichage (2),
les indications de service (9) de la commande vocale présentées sur l'affichage (2) étant masquées dès que le mode spécial est activé, les indications de service servant à visualiser des aides importantes de commande vocale et/ou à transmettre des commandes vocales possibles,
**caractérisé en ce que**
l'introduction d'informations après le masquage des indications de service peut également s'effectuer par la commande vocale.

2. Procédé selon la revendication 1, **caractérisé en ce que** les indications de service (9) sont de nouveau présentées lorsque le mode spécial est désactivé.

3. Dispositif de commande vocale pour véhicule automobile (10),
le dispositif (1) présentant des moyens (5) de commande vocale et un affichage (2),
une information concernant le dispositif (1) pouvant être introduite au moyen des moyens (5) de commande vocale et
l'affichage (2) étant configuré pour présenter une information du dispositif (1),
le dispositif (1) comportant un capteur de proximité (4),
le dispositif (1) étant configuré de telle sorte que le dispositif (1) active un mode spécial de commande manuelle dès que le capteur de proximité (4) a détecté un objet dans l'environnement de l'affichage (2),
le dispositif (1) désactivant le mode spécial dès que le capteur de proximité (4) ne détecte plus d'objet dans l'environnement de l'affichage (2),
le dispositif (1) masquant des indications de service (9) de la commande vocale présentée sur l'affichage (2) dès que le mode spécial est activé, les indications de services servant à visualiser des aides importantes de la commande vocale et/où à transmettre des commandes vocales possibles,
**caractérisé en ce que**
le dispositif est configuré de telle sorte que l'introduction d'informations après le masquage des indications de fonctionnement peut également s'effectuer par la commande vocale.

4. Dispositif selon la revendication 3, **caractérisé en ce que** le dispositif (1) est configuré pour mettre en oeuvre le procédé selon la revendication 2.

5. Véhicule doté d'un dispositif (1) selon les revendications 3 ou 4.
